# EUROPEAN PATENT APPLICATION

(11) **EP 4 668 427 A1**
(43) Date of publication of application: **24.12.2025**
(21) Application number: 24815944.4
(22) Date of filing: 03.06.2024
(51) Int. Cl.: H01M 50/15, H01M 50/105, H01M 50/174, H01M 50/627

(54) **SECONDARY BATTERY**

(30) Priority: 01.06.2023 KR 20230071156; 31.05.2024 KR 20240071969
(71) Applicant: LG Energy Solution, Ltd., Seoul 07335 (KR)
(72) Inventor: CHOI, Ji Eun, Daejeon 34122 (KR); KIM, Sang Hun, Daejeon 34122 (KR); LEE, Jae Ho, Daejeon 34122 (KR); LEE, Ji Sun, Daejeon 34122 (KR); YU, Hyung Kyun, Daejeon 34122 (KR)
(74) Representative: Plasseraud IP
(86) International application number: PCT/KR2024/007586
(87) International publication number: WO 2024/248570

(57) **Abstract**

The present invention relates to a secondary battery including an electrode assembly, an exterior film having an inner space which accommodates the electrode assembly, and an exterior opening which allows the inner space to communicate with outside, and a cover member which covers the exterior opening of the exterior film, wherein the cover member includes a first member which blocks the exterior opening, and a second member which extends from the first member and is coupled to an inner surface of the exterior film.

## Description

### TECHNICAL FIELD

### CROSS-REFERENCE TO RELATED APPLICATION

The present application claims the benefit of the priority of Korean Patent Application Nos. 10-2023-0071156 filed on June 1, 2023, and 10-2024-0071969, filed on May 31, 2024, which are hereby incorporated by reference in their entirety.

### TECHNICAL FIELD

The present invention relates to a secondary battery.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like. In particular, lithium secondary batteries have larger capacity and higher energy density than nickel-cadmium batteries or nickel-hydrogen batteries, and thus utilization thereof is on a rapidly increasing trend.

According to the shape of a battery case, the secondary batteries may be classified into a cylindrical or prismatic battery, in which an electrode assembly is embedded in a cylindrical or prismatic metal can, and a pouch-type battery in which an electrode assembly is embedded in a pouch-type case made of a laminate sheet, and the like.

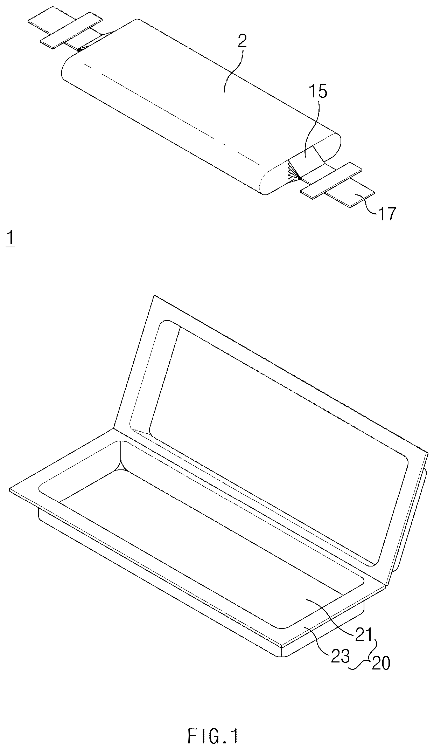

FIG. 1 is a view illustrating one example of a pouch-type secondary battery. A pouch-type secondary battery 1 (pouch-type cell) includes an electrode assembly 2 in which an electrode and a separator are alternately stacked, and an exterior film 20 in which the electrode assembly 2 is accommodated. Electrode tabs 15 may be connected to the electrodes of the electrode assembly 2, respectively. The electrode tabs 15 may be welded to each other on a certain area, and then be connected to an electrode lead 17 by welding. The exterior 20 includes an accommodation part 21 (cup part) for accommodating the electrode assembly 2. The accommodation part 21 of the exterior 20 may be provided as one or two portions each having a recessed shape. FIG. 1 illustrates the accommodation part 21 provided as two portions each having a recessed shape. This exterior 20 may be manufactured through molding of a pouch film. A sealing part 23 (terrace) is formed around a circumference of the accommodation part 21 by sealing.

Meanwhile, a molding depth of the cup part molded in the pouch film is limited by material characteristics of the pouch film. Accordingly, it is difficult to mold the cup part to have a depth sufficient to increase a battery capacity, and also a material or thickness of the pouch film has to be restrictively selected. As the thickness of the pouch film is decreased during the molding of the cup part, the exterior is prone to a defect such as cracks. In addition, it is general for the exterior to further include a pocket part that collects gas generated during activation, and the pocket part is removed after the gas in the pocket part is discharged through a degassing process. This leads to a problem that a portion of the exterior is always discarded.

### DISCLOSURE OF THE INVENTION

### TECHNICAL PROBLEM

An object of the present invention is to provide a secondary battery capable of solving various problems occurring during molding of a cup part for accommodating an electrode assembly.

Another object of the present invention is to provide a secondary battery capable of preventing an exterior from being discarded after a degassing process.

### TECHNICAL SOLUTION

In an embodiment, a secondary battery may include an electrode assembly, an exterior film having an inner space which accommodates the electrode assembly, and an exterior opening which allows the inner space to communicate with outside, and a cover member which covers the exterior opening of the exterior film, wherein the cover member includes a first member which blocks the exterior opening, and a second member which extends from the first member and is coupled to an inner surface of the exterior film.

In another embodiment, the exterior film may have a shape in which a certain sheet having a first end and a second end spaced apart from the first end in a certain direction is rolled or folded to contact the first end and the second end with each other.

In still another embodiment, an inner surface of the first end may be coupled to an inner surface or an outer surface of the second end by bonding or fusion.

In still another embodiment, the second member may be formed along an edge of the first member and extend from the first member in a direction facing the inner space.

In still another embodiment, the cover member may further include a third member which is formed along an edge of the first member and, together with the second member, defines a fitting space into which an end portion, which is adjacent to the exterior opening, of the exterior film is fitted.

In still another embodiment, the third member together with the second member may form a C-shaped cross-section open toward the exterior film.

In still another embodiment, the second member may have a length to be in contact with the electrode assembly in the exterior film.

In still another embodiment, the second member may be provided along an edge of the first member and extend from the first member in a direction facing the outside.

In still another embodiment, the cover member may further include a third member which is formed from an outer end of the second member along an edge of the second member and, together with the second member, defines a fitting space into which an end portion, which is adjacent to the exterior opening, of the exterior film is fitted.

In still another embodiment, the third member together with the second member may form a C-shaped cross-section open toward the exterior film.

In still another embodiment, the first member may have a through-hole through which an electrode lead electrically connected to the electrode assembly passes.

In still another embodiment, the first member may include an electrolyte injection hole provided to inject an electrolyte into the inner space of the exterior film.

In still another embodiment, the second member may be provided to support a portion, which is coupled to the second member, of the exterior film in a state of being supported by the first member when the second member is coupled to the inner surface of the exterior film.

### ADVANTAGEOUS EFFECTS

According to the present invention, the exterior film may be provided without the molding of the cup part for accommodating the electrode assembly. Thus, the size of the exterior film may be increased to easily increase the battery capacity, the material or the thickness of the exterior sheet for manufacturing the exterior film may be relatively freely selected, and the defect such as cracks may not easily occur.

In addition, according to the present invention, the electrolyte injection and the degassing may be performed through the electrolyte injection hole of the cover member so that the exterior is prevented from being unnecessary discarded.

Moreover, according to the present invention, the cover member may be provided with the space into which the end portion of the exterior film is fitted, so that the coupling force between the exterior film and the cover member is increased.

### BRIEF DESCRIPTION OF THE DRAWINGS

FIG. 1 is a view illustrating one example of a pouch-type secondary battery.
FIG. 2 is a perspective view illustrating a secondary battery according to Embodiment 1 of the present invention.
FIG. 3 is an exploded perspective view of the secondary battery in FIG. 2.
FIG. 4 is a cross-sectional view illustrating a modified example of an exterior film in FIG. 2.
FIG. 5 is a cross-sectional view of the secondary battery taken along a line A-A in FIG. 2.
FIG. 6 is a perspective view illustrating a secondary battery according to Embodiment 2 of the present invention.
FIG. 7 is an exploded perspective view of the secondary battery in FIG. 6.
FIG. 8 is a cross-sectional view of the secondary battery taken along a line B-B in FIG. 6.
FIG. 9 is a perspective view illustrating a modified example of the secondary battery in FIG. 6.
FIG. 10 is an exploded perspective view of the secondary battery in FIG. 9.
FIG. 11 is a cross-sectional view of the secondary battery taken along a line C-C in FIG. 9.
FIG. 12 is a perspective view illustrating a secondary battery according to Embodiment 3 of the present invention.
FIG. 13 is an exploded perspective view of the secondary battery in FIG. 12.
FIG. 14 is a cross-sectional view of the secondary battery taken along a line D-D in FIG. 12.
FIG. 15 is a perspective view illustrating a modified example of the secondary battery in FIG. 12.
FIG. 16 is an exploded perspective view of the secondary battery in FIG. 15.
FIG. 17 is a cross-sectional view of the secondary battery taken along a line E-E in FIG. 15.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and is not construed as limited by the embodiments set forth herein.

The parts unrelated to the description, or the detailed descriptions of related well-known art which may unnecessarily obscure subject matters of the present invention, will be ruled out in order to clearly describe the present invention. In reference numerals for elements in each drawing of this specification, the same or similar reference numerals refer to the same or similar elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

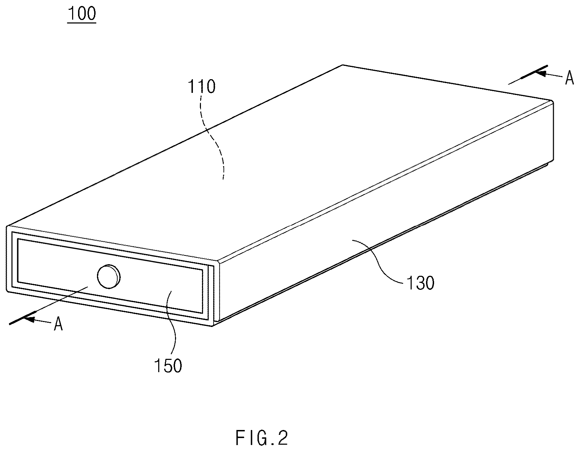

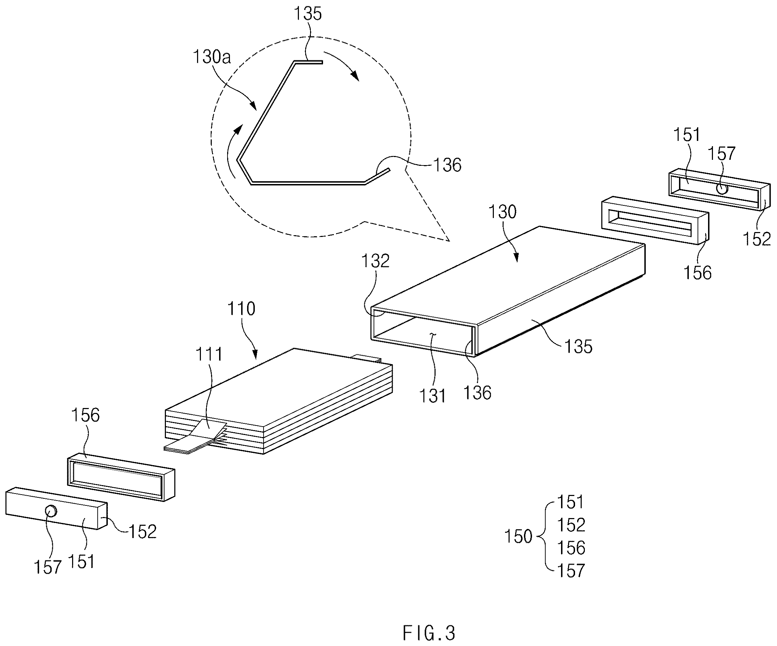

FIG. 2 is a perspective view illustrating a secondary battery 100 according to Embodiment 1 of the present invention. FIG. 3 is an exploded perspective view of the secondary battery 100 in FIG. 2. As illustrated in FIGS. 2 and 3, the secondary battery 100 according to Embodiment 1 of the present invention may include an electrode assembly 110, an exterior film 130, and a cover member 150. Hereinafter, the secondary battery 100 according to this embodiment will be described in detail mainly with reference to FIG. 3. For reference, the same content about Embodiment 1 may apply to an embodiment to be described later unless they contradict each other.

### Electrode assembly (110)

The electrode assembly 110 may be provided so that an electrode and a separator are alternately stacked. The electrode may include a positive electrode and a negative electrode. The electrode assembly 110 may include an electrode tab 111 connected to the electrode. The electrode tab 111 may be separately provided, or may be provided as a portion of a current collector constituting the electrode. The electrode tabs 111 may be welded to each other on a certain area and then electrically connected to an electrode terminal 157 to be described later.

### Exterior film (130)

The exterior film 130 may have an inner space 131 that accommodates the electrode assembly 110. The exterior film 130 may have an exterior opening 132 that allows the inner space 131 to communicate with the outside of the exterior film 130. The exterior opening 132 may be provided in each of both ends in a longitudinal direction of the exterior film 130. The exterior opening 132 may be sealed by the cover member 150 to be described later.

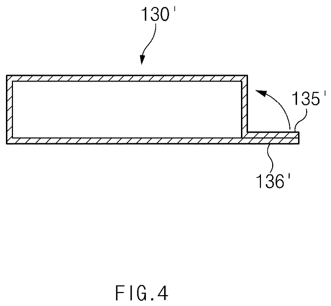

The exterior film 130 may be formed of a sheet-type exterior sheet 130a. The exterior sheet 130a may be a sheet having a first end 135 and a second end 136 spaced apart from the first end 135 in a certain direction. When this exterior sheet 130a is rolled or folded so that the first end 135 and the second end 136 are in contact with each other, the exterior film 130 may be formed. Here, the first end 135 and the second end 136 may be coupled to each other. An adhesive or thermal fusion may be used for the coupling. Here, as illustrated in FIG. 3, an inner surface of the first end 135 may be bonded to an outer surface of the second end 136. Alternatively, as illustrated in FIG. 4, an inner surface of a first end 135' may be bonded to an inner surface of a second end 136'. FIG. 4 is a cross-sectional view illustrating a modified example of an exterior film 130' in FIG. 2. A bonded portion of the first end 135' and the second end 136' may be folded in an arrow direction in FIG. 4. Accordingly, a space occupied by the exterior film 130' may be reduced.

The exterior sheet 130a may be a sheet including a metal layer made of aluminum, stainless steel, or the like. The exterior sheet 130a may be a laminate sheet further including a resin layer stacked on the metal layer. The exterior sheet 130a may include a first resin layer disposed on an inner surface of the metal layer. The first resin layer may be a layer made of polypropylene (PP). The first resin layer may require high insulating properties and corrosion resistance, and the first resin layer may be made of other resins that satisfy these requirements. The exterior sheet 130a may include a second resin layer disposed on an outer surface of the metal layer. The second resin layer may be a layer made of polyethylene terephthalate (PET). The second resin layer may need to protect the secondary battery 100 and also to electrically insulate the secondary battery 100, and the second resin layer may be made of other resins that satisfy these requirements.

### Cover member (150)

As illustrated in FIGS. 2 and 3, the cover member 150 may be a member that covers the exterior opening 132 of the exterior film 130. The cover member 150 may seal the exterior opening 132 of the exterior film 130 in order to prevent leakage of an electrolyte filled in the inner space 131 of the exterior film 130. The cover member 150 may seal the exterior film 130 just by being coupled to the exterior film 130. Alternatively, the cover member 150 may seal the exterior film 130 by including a sealant layer (not shown) between the cover member 150 and the exterior film 130.

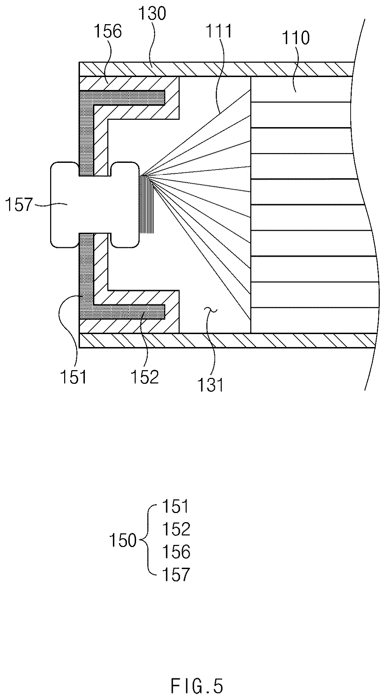

As illustrated in FIGS. 3 and 5, the cover member 150 may include a first member 151 that blocks the exterior opening 132. FIG. 5 is a cross-sectional view of the secondary battery taken along a line A-A in FIG. 2. The first member 151 alone or with a gasket member 156 to be described later may be provided to block the exterior opening 132 as a whole. To this end, the first member 151 may be provided to correspond to a shape of the exterior opening 132. FIG. 3 illustrates the first member 151 provided in a rectangular shape (the shape of the exterior opening).

In order to seal the inner space 131 of the exterior film 130, the first member 151 may be formed of a material that does not easily allow moisture to pass therethrough. For example, the first member 151 may be formed of a metal or resin, or formed of a laminate sheet including a metal layer. The same may apply to a second member 152 to be described below.

The cover member 150 may include the second member 152 extending from the first member 151. The second member 152 may be formed in one body with the first member 151, or may be provided in a separate body and then coupled to the first member 151. The first member 151 and the second member 152 may constitute a cap member that blocks the exterior opening 132.

The second member 152 may be coupled to be sealed to an inner surface of the exterior film 130. An adhesive, thermal fusion, or welding may be used for this coupling. exterior film. For example, coupling between a resin layer provided on an outer surface of the second member 152 and a resin layer provided on the inner surface of the exterior film 130 may be achieved by thermal fusion. In a case in which the gasket member 156 is provided as in FIG. 5, the second member 152 may be coupled to the exterior film 130 by using the gasket member 156 as a medium.

According to the related art, a cup part is molded in a pouch film, and the cup part is sealed using another pouch film to provide a pouch-type exterior. However, as a molding depth of the cup part is limited by material characteristics of the pouch film, it is difficult to mold the cup part to have a depth sufficient to increase a battery capacity, and also a material or thickness of the pouch film has to be restrictively selected. In addition, as the thickness of the pouch film is decreased during the molding of the cup part, the pouch-type exterior is prone to a defect such as cracks.

However, in the secondary battery 100 according to this embodiment, the exterior film 130 may be provided without molding a cup part, and then the electrode assembly 110 may be inserted into the exterior film 130 through the exterior opening 132 so that the constraints or defects as above do not occur. Thus, a size of the exterior film 130 may be increased to easily increase the battery capacity, a material or thickness of the exterior sheet 130a may be relatively freely selected, and a defect such as cracks may not easily occur. For example, when the exterior sheet 130a is rolled or folded to provide the exterior film 130, the exterior sheet 130a may be rolled or folded in a state in which the electrode assembly 110 is disposed on a top surface of the exterior sheet 130a in a spread state. Even in this case, the exterior film 130 may be provided without molding a cup part.

Meanwhile, as illustrated in FIGS. 3 and 5, the cover member 150 may include the gasket member 156. The gasket member 156 may prevent an electrolyte from leaking between the exterior film 130 and the cover member 150. The gasket member 156 may serve as a medium for tight coupling between the exterior film 130 and the cover member 150. As illustrated in FIG. 5, the gasket member 156 may be provided to surround both an inner surface and the outer surface of the second member 152. Alternatively, the gasket member 156 may be provided in the form of a photo frame so as to surround only the outer surface of the second member 152.

The cover member 150 may include an electrode terminal 157. The electrode terminal 157 is a component for electrically connecting the secondary battery 100 to another device. The electrode terminal 157 may be provided to pass through the first member 151 and have a portion exposed to the inner space 131 of the exterior film 130, the portion being connected to the electrode tabs 111. The electrode terminal 157 may have an I-shape so as not to be easily separated from the first member 151.

The first member 151 may include an electrolyte injection hole (not shown) for injecting the electrolyte into the inner space 131 of the exterior film 130. This electrolyte injection hole may be used to perform an electrolyte injection process and a degassing process after activation. For example, in a state in which the secondary battery 100 is disposed so that the first member 151 provided with the electrolyte injection hole faces an upper side, the electrolyte may be injected into the inner space 131 of the exterior film 130 through the electrolyte injection hole. In the degassing process, inner gas may be guided to be discharged through the electrolyte injection hole that is opened. The electrolyte injection hole may be closed by sealing or welding after the electrolyte injection and the degassing. Alternatively, a valve capable of being opened and closed may be installed on the electrolyte injection hole and open the electrolyte injection hole only when necessary.

According to the related art, the pouch-type exterior includes an accommodation part that accommodates the electrode assembly, and a pocket part that collects gas generated upon activation, and the pocket part is removed after the gas in the pocket part is discharged through the degassing process. This leads to a problem that a portion of the pouch-type exterior is always discarded. However, in the secondary battery 100 according to this embodiment, the electrolyte injection and the degassing may be performed using the electrolyte injection hole, and thus the discarding of the exterior as above may not occur.

Meanwhile, the secondary battery according to this embodiment is superior not only to the pouch-type battery but also a prismatic type battery according to the related art. In the prismatic type battery, when volume expansion of the electrode assembly occurs during charging or discharging, the electrode assembly may be damaged due to a prismatic type metal can that is hardly changed in shape. However, in the secondary battery according to this embodiment, when volume expansion of the electrode assembly occurs during charging or discharging, the exterior film may be correspondingly changed in shape, that is, the exterior film may be stretched, and thus the electrode assembly may not be damaged.

### Embodiment 2

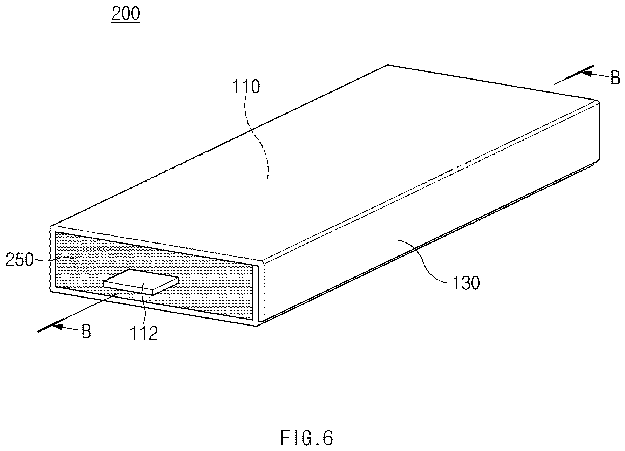

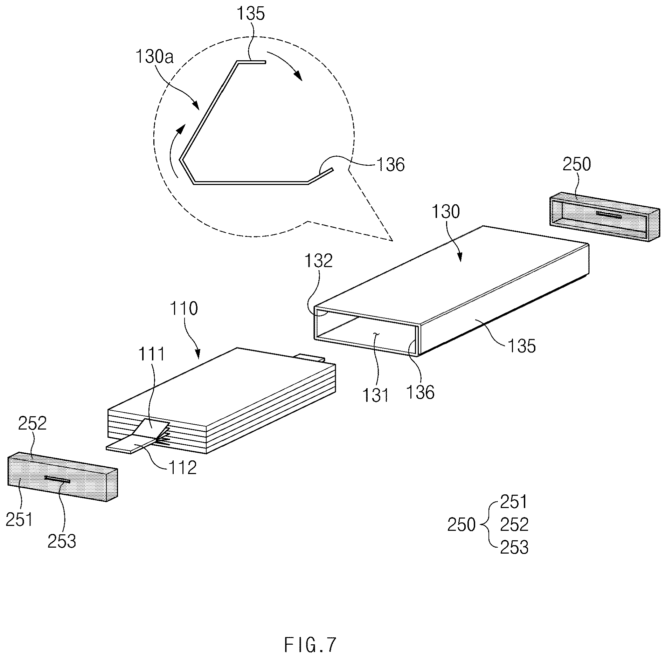

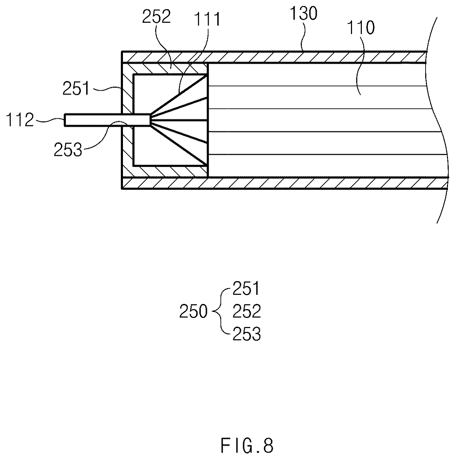

FIG. 6 is a perspective view illustrating a secondary battery 200 according to Embodiment 2 of the present invention. FIG. 7 is an exploded perspective view of the secondary battery 200 in FIG. 6. FIG. 8 is a cross-sectional view of the secondary battery 200 taken along a line B-B in FIG. 6. The secondary battery 200 according to this embodiment is different from the secondary battery 100 according to Embodiment 1 in terms of a cover member, and thus will be described below mainly in terms of this difference. For reference, the same content about Embodiment 2 may apply to the embodiment described above and an embodiment to be described later unless they contradict each other.

As illustrated in FIGS. 6 and 7, a cover member 250 may include a first member 251 that blocks a gap between an inner space 131 and an exterior opening 132. In order to seal the inner space 131 of an exterior film 130, the first member 251 may be formed of a material that does not easily allow moisture to pass therethrough. The same may apply to second and third members 252 and 255' to be described later.

The cover member 250 may include the second member 252 extending from the first member 251. The second member 252 may be coupled to an inner surface of the exterior film 130. An adhesive, thermal fusion, or welding may be used for this coupling. For example, coupling between a resin layer provided on an outer surface of the second member 252 and a resin layer provided on the inner surface of the exterior film 130 may be achieved by thermal fusion.

Meanwhile, as illustrated in FIG. 7, the first member 251 may include a through-hole 253 through which an electrode lead 112 electrically connected to the electrode assembly 110 passes. Accordingly, the electrode lead 112 may be easily exposed to the outside when coupling the exterior film 130 to the cover member 250. For example, while the cover member 250 is coupled to an exterior opening 132 of the exterior film 130 in a state in which the electrode assembly 110 is accommodated in the inner space 131 of the exterior film 130, the electrode lead 112 may be fitted into the through-hole 253 of the first member 251 so that the electrode lead 112 is easily exposed to the outside. For example, in order to prevent the electrolyte from leaking through the through-hole 253, a sealant layer (not shown) may be provided between an outer surface of the electrode lead 112 and an inner surface of the through-hole 253.

The first member 251 may include an electrolyte injection hole (not shown) for injecting the electrolyte into the inner space 131 of the exterior film 130.

Meanwhile, when the second member 252 is coupled to the inner surface of the exterior film 130, the second member 252 may be provided to support a portion, which is coupled to the second member 252, of the exterior film 130, in a state of being supported by the first member 251.

This will be described with reference to FIG. 8. The exterior film 130 may need to be pressed toward the second member 252 in order to couple the inner surface of the exterior film 130 to the outer surface of the second member 252. During this pressing, the second member 252 may need to be supported. In the secondary battery 200 according to this embodiment, even when the exterior film 130 is pressed toward the second member 252, the first member 251 coupled to the second member 252 may support the second member 252. Thus, even though a separate member for support is not used, the second member 252 may be supported during the pressing. For this supporting, each of the first and second members 251 and 252 may be made of a material having higher rigidity than that of the exterior film 130.

Hereinafter, detailed structure of the cover member 250 will be described. As illustrated in FIG. 8, the second member 252 of the cover member 250 may be provided along an edge of the first member 251. In order to be tightly coupled to the exterior film 130, the second member 252 may be provided on the entirety of the edge of the first member 251, or alternatively may be provided on a portion of the edge. FIG. 7 illustrates the second member 252 provided on the entirety of the edge of the first member 251.

The second member 252 may extend from the first member 251 in a direction facing the inner space 131 (a right direction in FIG. 8). An extension length of the second member 252 may be determined in light of coupling force with the exterior film 130. For example, when strong coupling is required, the second member 252 may be provided to be elongated to increase a coupling surface area. As illustrated in FIG. 8, the second member 252 may be set to have a length to be in contact with the electrode assembly 110. Accordingly, the electrode assembly 110 may be prevented from moving inside the exterior film 130.

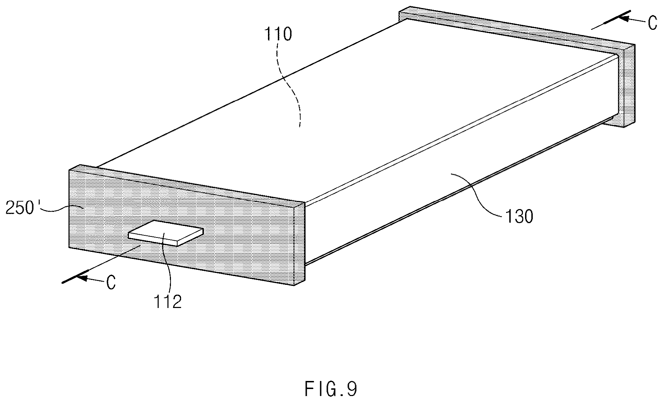

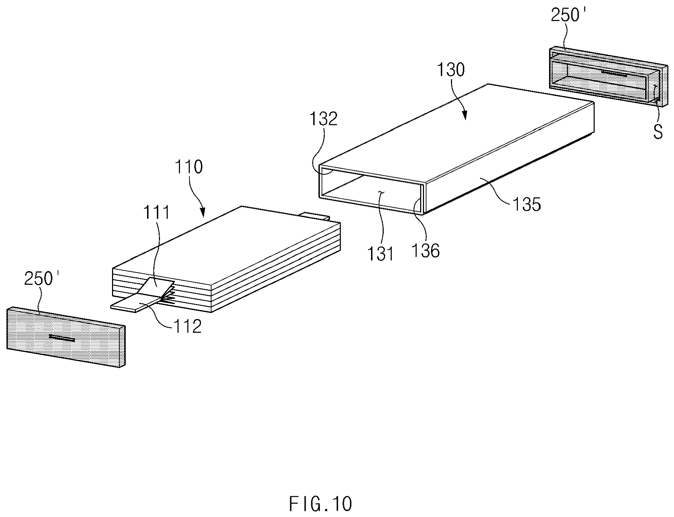

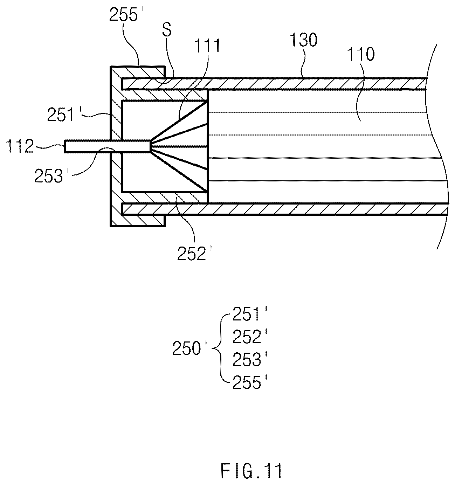

A cover member 250' may be modified as in FIGS. 9 to 11. FIG. 9 is a perspective view illustrating a modified example of the secondary battery in FIG. 6. FIG. 10 is an exploded perspective view of the secondary battery in FIG. 9. FIG. 11 is a cross-sectional view of the secondary battery taken along a line C-C in FIG. 9.

As illustrated in FIG. 11, the cover member 250' may include a third member 255' provided along an edge of a first member 251'. The third member 255' may be provided on the entirety or a portion of the edge of the first member 251'. FIG. 10 illustrates the third member 255' provided on the entirety of the edge of the first member 251'.

The third member 255' together with a second member 252' may define a fitting space S (see FIG. 10). As illustrated in FIG. 11, the fitting space S may be a space into which an end portion, which is adjacent to the exterior opening 132, of the exterior film 130 is fitted. When the end portion of the exterior film 130 is fitted into the fitting space S, the coupling force between the exterior film 130 and the cover member 250' may be increased. An adhesive may be filled in the fitting space S in order to more increase the coupling force.

As illustrated in FIG. 11, the third member 255' together with the second member 252' may define a C-shaped cross-section which is opened toward to the exterior film 130 (which is opened in a right direction in FIG. 11). FIG. 11 illustrates the second member 252' that has a length greater than a length of the third member 255'. In this case, during the fitting of the end portion of the exterior film 130 into the fitting space S, the end portion may be guided by the second member 252' so that the end portion may be more easily fitted into the fitting space S.

As illustrated in FIG. 11, the third member 255' may include a vertical portion extending vertically from the first member 251', and a horizontal portion extending horizontally from the vertical portion.

Meanwhile, a through-hole 253' and an electrolyte injection hole (not shown) as described above may be provided also in the first member 251' according to this modified example.

### Embodiment 3

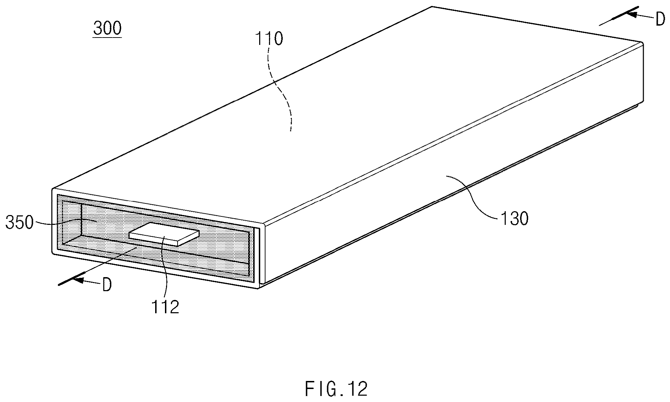

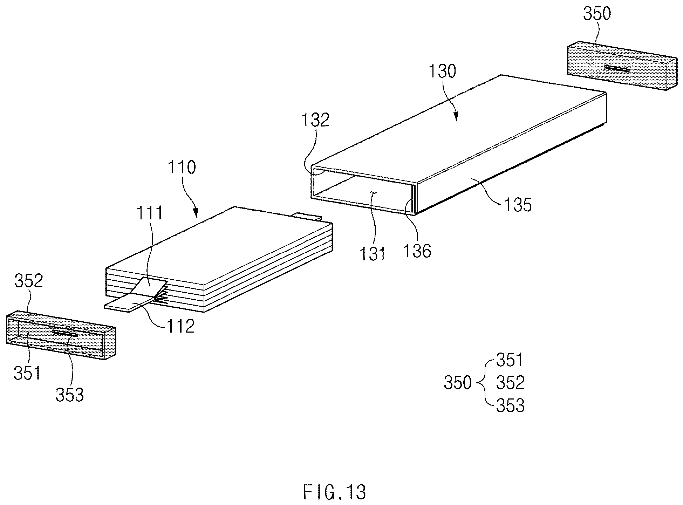

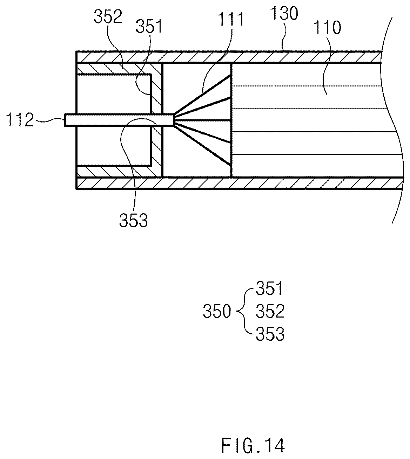

FIG. 12 is a perspective view illustrating a secondary battery 300 according to Embodiment 3 of the present invention. FIG. 13 is an exploded perspective view of the secondary battery 300 in FIG. 12. FIG. 14 is a cross-sectional view of the secondary battery 300 taken along a line D-D in FIG. 12. The secondary battery 300 according to this embodiment is different from the secondary battery 100 according to Embodiment 1 in terms of a cover member, and thus will be described below mainly in terms of this difference. For reference, the same content about Embodiment 3 may apply to the embodiments described above unless they contradict each other.

As illustrated in FIG. 13, a cover member 350 according to this embodiment may include a first member 351 and a second member 352. The first member 351 may be a member that blocks a gap between an exterior opening 132 and an inner space 131 of an exterior film 130. The second member 352 may be provided along an edge of the first member 351 and extend from the first member 351 in a direction facing the outside of the exterior film 130 (a left direction in FIG. 14).

The exterior film 130 may need to be pressed toward the second member 352 in order to couple an inner surface of the exterior film 130 to an outer surface of the second member 352. During this pressing, the second member 352 may need to be supported. In the secondary battery 300 according to this embodiment, the inner surface of the second member 352 may be exposed to the outside of the cover member 350 so that a member for supporting the second member 352 is easily disposed on the inner surface of the second member 352. For example, as described above, the second member 352 may be supported by the first member 351.

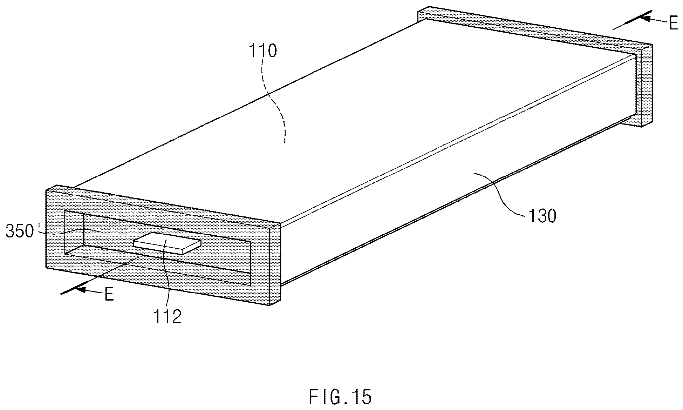

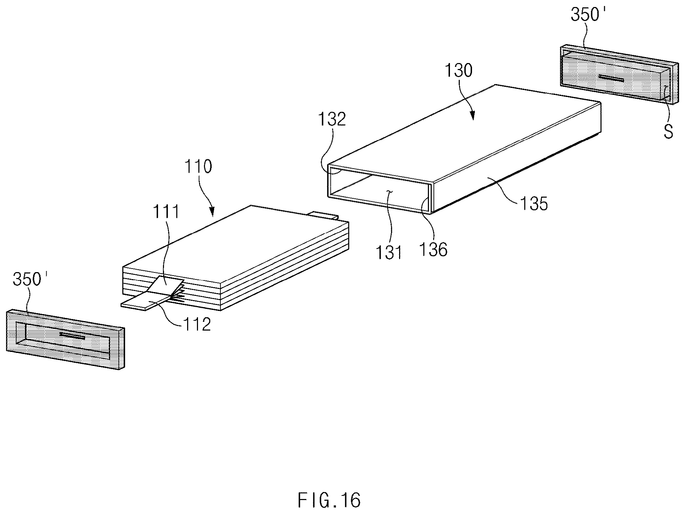

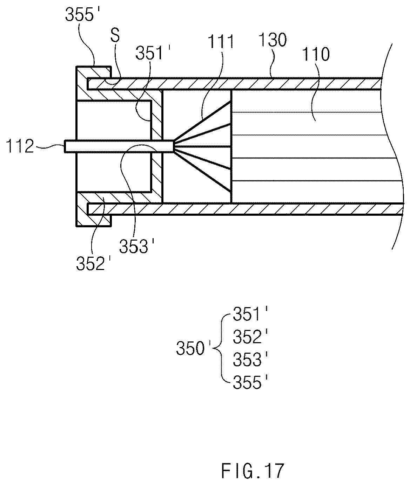

A cover member 350' may be modified as in FIGS. 15 to 17. FIG. 15 is a perspective view illustrating a modified example of the secondary battery in FIG. 12. FIG. 16 is an exploded perspective view of the secondary battery in FIG. 15. FIG. 17 is a cross-sectional view of the secondary battery taken along a line E-E in FIG. 15.

As illustrated in FIG. 17, the cover member 350' may include a third member 355' provided from an outer end (a left end in FIG. 17) of a second member 352' along an edge of the second member 352'. The third member 355' together with the second member 352' may define a fitting space S (see FIG. 13) into which an end portion, which is adjacent to the exterior opening 132, of the exterior film 130 is fitted. When the end portion of the exterior film 130 is fitted into the fitting space S, the coupling force between the exterior film 130 and the cover member 350' may be increased. An adhesive may be filled in the fitting space S in order to more increase the coupling force.

As illustrated in FIG. 17, the third member 355' together with the second member 352' may define a C-shaped cross-section which is opened toward to the exterior film 130 (which is opened in a right direction in FIG. 17). As illustrated in FIG. 17, the third member 355' may include a vertical portion extending vertically from the second member 351', and a horizontal portion extending horizontally from the vertical portion.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

## Claims

1. A secondary battery comprising:
an electrode assembly;
an exterior film having an inner space which accommodates the electrode assembly, and an exterior opening which allows the inner space to communicate with outside; and
a cover member configured to cover the exterior opening of the exterior film,
wherein the cover member comprises:
a first member configured to block the exterior opening; and
a second member extending from the first member and coupled to an inner surface of the exterior film.

2. The secondary battery of claim 1, wherein the exterior film has a shape in which a certain sheet having a first end and a second end spaced apart from the first end in a certain direction is rolled or folded to contact the first end and the second end with each other.

3. The secondary battery of claim 2, wherein an inner surface of the first end is coupled to an inner surface or an outer surface of the second end by bonding or fusion.

4. The secondary battery of claim 1, wherein the second member is formed along an edge of the first member and extends from the first member in a direction facing the inner space.

5. The secondary battery of claim 4, wherein the cover member further comprises a third member formed along an edge of the first member and configured to define, together with the second member, a fitting space into which an end portion, which is adjacent to the exterior opening, of the exterior film is fitted.

6. The secondary battery of claim 5, wherein the third member together with the second member forms a C-shaped cross-section open toward the exterior film.

7. The secondary battery of claim 4, wherein the second member has a length to be in contact with the electrode assembly in the exterior film.

8. The secondary battery of claim 1, wherein the second member is provided along an edge of the first member and extends from the first member in a direction facing the outside.

9. The secondary battery of claim 8, wherein the cover member further comprises a third member formed from an outer end of the second member along an edge of the second member, and configured to define, together with the second member, a fitting space into which an end portion, which is adjacent to the exterior opening, of the exterior film is fitted.

10. The secondary battery of claim 9, wherein the third member together with the second member forms a C-shaped cross-section open toward the exterior film.

11. The secondary battery of claim 1, wherein the first member has a through-hole through which an electrode lead electrically connected to the electrode assembly passes.

12. The secondary battery of claim 1, wherein the first member comprises an electrolyte injection hole configured to inject an electrolyte into the inner space of the exterior film.

13. The secondary battery of claim 1, wherein the second member is provided to support a portion, which is coupled to the second member, of the exterior film in a state of being supported by the first member when the second member is coupled to the inner surface of the exterior film.
